# EUROPEAN PATENT APPLICATION

(11) **EP 4 539 417 A1**
(43) Date of publication of application: **16.04.2025**
(21) Application number: 23845076.1
(22) Date of filing: 02.06.2023
(51) Int. Cl.: H04L 41/0893

(54) **NETWORK SLICE SUBSCRIPTION METHOD, APPARATUS AND SYSTEM**

(30) Priority: 25.07.2022 CN 202210878643
(71) Applicant: Huawei Technologies Co., Ltd., Shenzhen, Guangdong 518129 (CN)
(72) Inventor: MA, Guojun, Shenzhen, Guangdong 518129 (CN); YAN, Yali, Shenzhen, Guangdong 518129 (CN)
(74) Representative: Pfenning, Meinig & Partner mbB
(86) International application number: PCT/CN2023/098142
(87) International publication number: WO 2024/021863

(57) **Abstract**

This application discloses a network slice subscription method and apparatus and a system, to improve a speed at which a user equipment subscribes to a network slice. The method includes: A network exposure function network element may request, based on a first indication from an application function network element, a unified data management network element to cause a first user equipment to subscribe to a first network slice. The first indication indicates to cause a user equipment to subscribe to a network slice, and the first user equipment is the user equipment indicated by the first indication. According to the method, the network exposure function network element may request, based on the indication from the application function network element, the unified data management network element to cause the first user equipment to subscribe to the first network slice. The speed at which the user equipment subscribes to the network slice can be improved according to the method, compared with that in a method in which an operator manually changes subscription information. This improves network slice subscription efficiency. In addition, according to the method in which the application function network element indicates the network exposure function network element to cause the user equipment to subscribe to the network slice, flexibility of changing subscription information can be further improved.

## Description

### CROSS-REFERENCE TO RELATED APPLICATIONS

This application claims priority to Chinese Patent Application No. 202210878643.0, filed with the China National Intellectual Property Administration on July 25, 2022 and entitled "NETWORK SLICE SUBSCRIPTION METHOD AND APPARATUS AND SYSTEM", which is incorporated herein by reference in its entirety.

### TECHNICAL FIELD

This application relates to the field of communication technologies, and in particular, to a network slice subscription method and apparatus and a system.

### BACKGROUND

Currently, a network slicing (Network slicing) technology is introduced into a mobile communication system, for example, a 5th generation (5th generation) 5G mobile communication system. In the network slicing technology, a plurality of logical networks are provided based on general-purpose hardware. Each network may be referred to as a network slice.

A company can rent or purchase a network slice from an operator. After a user equipment (user equipment, UE) subscribes to a service corresponding to the network slice from the company, the company may request the operator to cause the UE to subscribe to the corresponding network slice. Currently, when causing the UE to subscribe to the network slice, the operator manually performs network slice subscription. For example, a company 1 rents or purchases a network slice 1 of the operator, and uses the network slice 1 as a network slice that can be used to transmit a data packet of a video application 1. If a plurality of UEs subscribe to members of the video application 1 from the company 1, the company 1 may provide a list of the plurality of UEs to the operator, and the operator may manually cause the plurality of UEs to subscribe to the network slice 1. In this way, the operator consumes a large amount of manpower to cause the UE to subscribe to the network slice.

### SUMMARY

This application provides a network slice subscription method and apparatus and a system, to improve a speed at which a UE subscribes to a network slice.

According to a first aspect, an embodiment of this application provides a network slice subscription method. The method may be applied to a network element such as a network exposure function network element. The following uses an example in which the method is applied to the network exposure function network element for description. The method includes: The network exposure function network element may request, based on a first indication from an application function network element, a unified data management network element to cause a first user equipment to subscribe to a first network slice. The first indication indicates to cause a user equipment to subscribe to a network slice, and the first user equipment is the user equipment indicated by the first indication.

According to the method, the network exposure function network element may request, based on the indication from the application function network element, the unified data management network element to cause the first user equipment to subscribe to the first network slice. A speed at which the UE subscribes to the network slice can be improved according to the method, compared with that in a method in which an operator manually changes subscription information. This improves network slice subscription efficiency. In addition, according to the method in which the application function network element indicates the network exposure function network element to cause the user equipment to subscribe to the network slice, flexibility of changing subscription information can be further improved.

In a possible implementation, after receiving first information from the application function network element, the network exposure function network element may further send second information to a policy control function network element. The first information is used to determine a correspondence between the first network slice and the first user equipment, and the second information includes information indicating the correspondence.

Optionally, the first information includes information indicating the first user equipment and information indicating the first network slice.

In this implementation, the network exposure function network element may directly send the second information to the policy control function network element through an interface between the network exposure function network element and the policy control function network element, and an intermediate node is not needed to transfer the second information. Therefore, signaling overheads can be reduced in this process.

In a possible implementation, after receiving third information from the application function network element, the network exposure function network element may further send a user equipment route selection policy to the policy control function network element. The third information is used to trigger generation of the user equipment route selection policy, and the user equipment route selection policy corresponds to the first information.

Currently, a network exposure function network element sends a user equipment route selection policy to a unified data repository, and then a policy control function network element obtains the user equipment route selection policy from the unified data repository. The procedure is complex. In this implementation, the network exposure function network element may directly send the user equipment route selection policy to the policy control function network element through the interface between the network exposure function network element and the policy control function network element. Therefore, signaling overheads can be reduced. In addition, in this implementation, the policy control function network element does not need to preconfigure the user equipment route selection policy, and a unified data repository is not needed to transfer the user equipment route selection policy. Therefore, implementation is simple.

In a possible implementation, after receiving the first indication, when the first user equipment has not subscribed to the first network slice, the network exposure function network element may send a first request to the unified data management network element. In this implementation, when determining that the first user equipment has not subscribed to the first network slice, the network exposure function network element may actively send a request for causing the first user equipment to subscribe to the first network slice. Therefore, the first user equipment can quickly subscribe to the first network slice, so that signaling needed for subscription can be reduced, and signaling overheads can be reduced.

In a possible implementation, that the first indication indicates to cause a user equipment to subscribe to a network slice includes: The first indication indicates to cause the first user equipment to subscribe to the first network slice. Before receiving the first indication from the application function network element, the network exposure function network element may send a second indication to the application function network element, where the second indication indicates that the first user equipment has not subscribed to the first network slice. In this implementation, after receiving the second indication indicating that the first user equipment has not subscribed to the first network slice, the application function network element may indicate the network exposure function network element to send the request for causing the first user equipment to subscribe to the first network slice. In this way, while the speed at which the UE subscribes to the network slice is improved, the application function network element may perform unified management on a subscription process.

In a possible implementation, before sending the first request to the unified data management network element, the network exposure function network element may send a second request to the unified data management network element, where the second request is used to request to authenticate whether the first user equipment has subscribed to the first network slice. Then, the network exposure function network element may receive a second response from the unified data management network element, where the second response indicates that the first user equipment has not subscribed to the first network slice. In this implementation, the network exposure function network element may learn in a timely manner that the first user equipment has not subscribed to the first network slice.

In a possible implementation, after sending the first request to the unified data management network element, the network exposure function network element may receive a first response from the unified data management network element, where the first response indicates that the first user equipment has subscribed to the first network slice. In this implementation, the unified data management network element may notify, in a timely manner, the network exposure function network element that the first user equipment has subscribed to the first network slice. In this way, the network exposure function network element may manage the first user equipment in a timely manner, for example, send the user equipment route selection policy to the first user equipment in a timely manner, where the user equipment route selection policy includes a correspondence between the first user equipment and the first network slice, so that the first user equipment can use the first network slice in a timely manner as needed. This improves user experience.

In a possible implementation, the first request includes the information indicating the first network slice and the information indicating the first user equipment.

According to a second aspect, an embodiment of this application provides a network slice subscription method. The method includes: An application function network element sends a first indication to a network exposure function network element, where the first indication indicates to cause a user equipment to subscribe to a network slice, and the user equipment and the network slice that are indicated by the first indication may not be a specific user equipment and network slice. In this way, after receiving the first indication, when a first user equipment has not subscribed to a first network slice, the network exposure function network element may request a unified data management network element to cause the first user equipment to subscribe to the first network slice. Therefore, the first user equipment can quickly subscribe to the first network slice, so that signaling needed for subscription can be reduced, and signaling overheads can be reduced.

According to a third aspect, an embodiment of this application provides a network slice subscription method. The method includes: After receiving a second indication from a network exposure function network element, an application function network element sends a first indication to the network exposure function network element. The second indication indicates that a first user equipment has not subscribed to a first network slice, and the first indication indicates to cause the first user equipment to subscribe to the first network slice. In this way, after receiving the first indication, the network exposure function network element may request a unified data management network element to cause the first user equipment to subscribe to the first network slice. According to the method, after receiving the second indication indicating that the first user equipment has not subscribed to the first network slice, the application function network element may indicate the network exposure function network element to send a request for causing the first user equipment to subscribe to the first network slice. In this way, while a speed at which a UE subscribes to a network slice is improved, the application function network element may perform unified management on a subscription process.

According to a fourth aspect, an embodiment of this application provides a network slice subscription method. The method includes: After receiving a first request from a network exposure function network element, a unified data management network element may cause a first user equipment to subscribe to a first network slice. The first request is used to request to cause the first user equipment to subscribe to the first network slice.

According to the method, the unified data management network element may cause the first user equipment to subscribe to the first network slice based on the request from the network exposure function network element, so that the first user equipment can subscribe to the first network slice through signaling exchange. A speed at which a UE subscribes to a network slice can be improved according to the method, compared with that in a method in which an operator manually changes subscription information. This improves network slice subscription efficiency.

In a possible implementation, the unified data management network element may further send a first response to the network exposure function network element, where the first response indicates that the first user equipment has subscribed to the first network slice. In this implementation, the unified data management network element may notify, in a timely manner, the network exposure function network element that the first user equipment has subscribed to the first network slice. In this way, the network exposure function network element may manage the first user equipment in a timely manner, for example, send a user equipment route selection policy to the first user equipment in a timely manner, where the user equipment route selection policy includes a correspondence between the first user equipment and the first network slice, so that the first user equipment can use the first network slice in a timely manner as needed. This improves network slice subscription efficiency.

According to a fifth aspect, an embodiment of this application provides a network slice subscription method. The method includes: A policy control function network element receives a user equipment policy authorization message from a network exposure function network element, where the user equipment policy authorization message includes second information, and the second information includes information indicating a correspondence between a first network slice and a first user equipment. Then, the policy control function network element may send, to the first user equipment, the information indicating the correspondence.

According to the method, the network exposure function network element may directly send the second information to the policy control function network element through an interface between the network exposure function network element and the policy control function network element, and an intermediate node is not needed to transfer the second information. Therefore, signaling overheads can be reduced in this process.

In a possible implementation, the user equipment policy authorization message includes a user equipment route selection policy; and after receiving the user equipment policy authorization message from the network exposure function network element, the policy control function network element may send the user equipment route selection policy to the first user equipment.

Currently, a network exposure function network element needs to send a user equipment route selection policy to a unified data repository, and then a policy control function network element obtains the user equipment route selection policy from the unified data repository. The procedure is complex. In this implementation, the network exposure function network element may directly send the user equipment route selection policy to the policy control function network element through the interface between the network exposure function network element and the policy control function network element. Therefore, signaling overheads can be reduced. In addition, in this implementation, the policy control function network element does not need to preconfigure the user equipment route selection policy, and a unified data repository is not needed to transfer the user equipment route selection policy. Therefore, implementation is simple.

In a possible implementation, the user equipment policy authorization message includes at least one of the following: an identifier of the first network slice and a data network name corresponding to the first network slice.

According to a sixth aspect, an embodiment of this application provides an apparatus, including a unit configured to perform steps in any one of the foregoing aspects.

According to a seventh aspect, an embodiment of this application provides an apparatus, including at least one processing element and at least one storage element. The at least one storage element is configured to store a program and data. The at least one processing element is configured to read and execute the program and the data that are stored in the storage element, so that the method provided in any one of the foregoing aspects of this application is implemented.

According to an eighth aspect, an embodiment of this application provides a communication system, including a network exposure function network element and an application function network element. The network exposure function network element is configured to perform the method according to the first aspect.

In a possible implementation, the system further includes a unified data management network element, configured to receive a first request from the network exposure function network element, where the first request is used to request to cause a first user equipment to subscribe to a first network slice.

In a possible implementation, the system further includes: a policy control function network element, configured to: receive second information from the network exposure function network element, where the second information includes information indicating a correspondence between the first network slice and the first user equipment; and send the information indicating the correspondence to the first user equipment.

According to a ninth aspect, an embodiment of this application further provides a computer program. When the computer program is run on a computer, the computer is enabled to perform the method provided in any one of the foregoing aspects.

According to a tenth aspect, an embodiment of this application further provides a computer-readable storage medium. The computer-readable storage medium stores a computer program. When the computer program is executed by a computer, the computer is enabled to perform the method provided in any one of the foregoing aspects.

According to an eleventh aspect, an embodiment of this application further provides a chip. The chip is configured to read a computer program stored in a memory, to perform the method provided in any one of the foregoing aspects.

According to a twelfth aspect, an embodiment of this application further provides a chip system. The chip system includes a processor, configured to support a computer apparatus in implementing the method provided in any one of the foregoing aspects. In a possible implementation, the chip system further includes a memory. The memory is configured to store a program and data that are necessary for the computer apparatus. The chip system may include a chip, or may include a chip and another discrete component.

According to a thirteenth aspect, an embodiment of this application further provides a computer program product. The computer program product includes a computer program or instructions. When the computer program or the instructions are run by a network slice subscription apparatus, the method provided in any one of the foregoing aspects is performed.

For technical effects that can be achieved in any one of the sixth aspect to the thirteenth aspect, refer to descriptions of technical effects that can be achieved in any possible implementation in any one of the first aspect to the fifth aspect. Repeated details are not described.

### BRIEF DESCRIPTION OF DRAWINGS

FIG. 1 is a diagram of an architecture of a communication system according to an embodiment of this application;
FIG. 2 is a flowchart of a network slice subscription method according to an embodiment of this application;
FIG. 3 is a flowchart of another network slice subscription method according to an embodiment of this application;
FIG. 4 is a flowchart of still another network slice subscription method according to an embodiment of this application;
FIG. 5 is a diagram of a structure of a network slice subscription apparatus according to an embodiment of this application; and
FIG. 6 is a diagram of a structure of a network slice subscription apparatus according to an embodiment of this application.

### DESCRIPTION OF EMBODIMENTS

This application provides a network slice subscription method and apparatus, to improve a speed at which a UE subscribes to a network slice. The method and the apparatus are based on a same technical concept. Because the method and the apparatus have a similar problem-resolving principle, for implementations of the apparatus and the method, refer to those of each other, and repeated details are not described again.

The following describes some terms in embodiments of this application, to help a person skilled in the art in understanding.
(1) A communication device is generally a device with a communication function. For example, the communication device may be but is not limited to a user equipment (user equipment, UE), an access network (access network, AN) device, an access point, or a core network (core network, CN) device.
(2) A user equipment route selection policy (UE Route Selection Policy, URSP) is a policy of selecting a network slice for a UE, and may be sent by a network side to the UE.
   The URSP may include a correspondence between the UE and the network slice. Optionally, the URSP further includes a correspondence between an application in the UE and the network slice. For example, the URSP indicates that a video application 1 corresponds to a network slice 1, a game application 2 corresponds to a network slice 2, and a virtual reality (Virtual Reality, VR) application 3 corresponds to a network slice 3. In this way, when running the video application 1, the UE may communicate with the network side through the network slice 1; when running the game application 1, the UE may communicate with the network side through the network slice 2; and when running the VR application 3, the UE may communicate with the network side through the network slice 3.
(3) An external group identifier (external group identifier) is a globally unique identifier of a user group to which a UE belongs, and may include a domain identifier (domain identifier) and a local identifier (local identifier). The domain identifier identifies a domain controlled by a mobile network operator (mobile network operator, MNO), and the mobile network operator may be a company that rents or purchases a network slice in this application. The local identifier may be a unique identifier that is of the user group to which the UE belongs and that is in the domain. For example, the external group identifier may include an identifier of a domain 1 operated by a company 1, and a unique identifier that is of the user group to which the UE belongs and that is in the domain 1.

An internal group identifier (internal group identifier) is a unique identifier that is of a user group to which a UE belongs and that can be identified by a communication device in a mobile communication system. For example, in a unified data repository (unified data repository, UDR), subscription data of a UE may be associated with one or more groups of UEs. An internal group identifier may identify a group of UEs. In a session management process, a unified data management (unified data management, UDM) may obtain the internal group identifier from the UDR and sends the internal group identifier to a session management function (session management function, SMF) as a part of session management subscription data. An example of the internal group identifier is an international mobile subscriber identity (international mobile subscriber identity, IMSI) group identifier (IMSI-Group Identifier).

A correspondence exists between the local identifier in the external group identifier and the internal group identifier, and may be used to determine the internal group identifier.

In this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists. The character "/" generally indicates an "or" relationship between the associated objects. For example, A/B indicates A or B. "At least one of the following items (pieces)" or a similar expression thereof indicates any combination of these items (pieces), including any combination of singular items (pieces) or plural items (pieces).

In addition, it should be understood that, in the descriptions of this application, words such as "first" and "second" are merely used for distinction and description, but should not be construed as an indication or implication of relative importance, or should not be construed as an indication or implication of an order.

A communication system to which embodiments of this application are applied is described below with reference to the accompanying drawings.

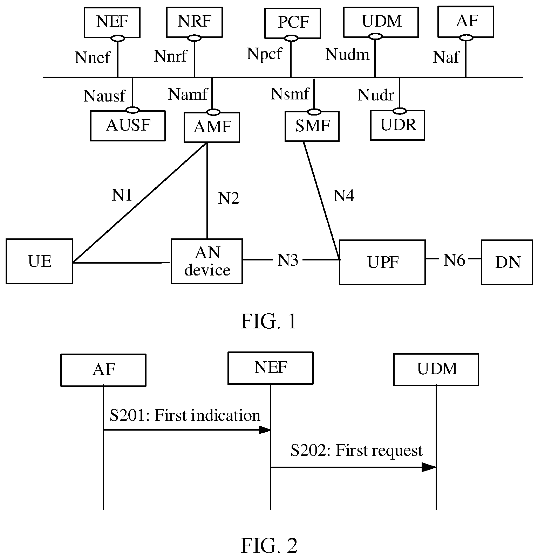

FIG. 1 shows a possible architecture of a communication system to which a network slice subscription method is applicable according to an embodiment of this application. As shown in FIG. 1, the communication system includes three parts: a UE, a mobile communication system, and a data network (data network, DN). The mobile communication system provides an access service and a connection service for the UE.

The UE is an entity that can receive and transmit radio signals on a user side, and may access the DN via the mobile communication system. Optionally, the UE may serve as a relay device of another data collector or a relay device of another UE, so that these devices can perform service communication with the DN via the mobile communication system.

In this application, the UE may also be referred to as a terminal device, a mobile station (mobile station, MS), a mobile terminal (mobile terminal, MT), or the like. Currently, some examples of the UE are: a mobile phone (mobile phone), a tablet computer, a notebook computer, a palmtop computer, a vehicle-mounted device, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The mobile communication system may access at least one DN, and a same DN may also be accessed by at least one mobile communication system. The mobile communication system may include two parts: an AN and a CN.

A network device deployed in the AN is an AN device, and may be specifically responsible for functions such as radio access, radio resource management on an air interface side, QoS management, data compression and encryption, and user plane data forwarding.

As a node in a radio access network, the AN device may also be referred to as a base station, a radio access network (radio access network, RAN) node (or device), or an access point (access point, AP). Currently, some examples of the AN device are: a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and the like.

In addition, in a network structure, the AN device may include a central unit (central unit, CU) node and a distributed unit (distributed unit, DU) node. In this structure, protocol layers of the AN device are split. Functions of some protocol layers are controlled by a CU in a centralized manner. Functions of some or all of remaining protocol layers are distributed in a DU, and the CU controls the DU in a centralized manner.

Network elements deployed in the CN may be collectively referred to as a CN device. The CN device can connect the UE to different data networks, and perform services such as charging, mobility management, session management, and user plane forwarding. In mobile communication systems of different standards, names of CN devices having a same function may be different. However, a specific name of a CN device having each function is not limited in embodiments of this application. The following uses a CN in a 5G mobile communication system as an example to describe functions of main network elements in the CN in detail. Network elements in the CN in the 5G mobile communication system may be classified into two types: a control plane network element and a user plane network element.

The user plane network element includes a user plane function (user plane function, UPF), and is mainly responsible for packet data packet forwarding, QoS control, charging information statistics, and the like.

The control plane network element is mainly responsible for service procedure interaction, delivering a data packet forwarding policy, a QoS control policy, and the like to a user plane. The control plane network element mainly includes but is not limited to an access and mobility management function (access and mobility management function, AMF), an SMF, a policy control function (policy and charging function, PCF), a network exposure function (network exposure function, NEF), a UDM, a UDR, an application function (application function, AF), an authentication server function (authentication server function, AUSF), and a network function repository function (network function (network function, NF) repository function, NRF).

The AMF is mainly responsible for access management and mobility management of the UE, for example, responsible for status maintenance of the UE, reachability management of the UE, and forwarding of a non-mobility management (mobility management, MM) non-access stratum (non-access stratum, NAS) message.

The SMF is mainly responsible for session management of the UE, for example, managing creation and deletion of a PDU session, and maintaining a PDU session context and user plane forwarding pipeline information.

The PCF is mainly responsible for policy control, for example, generating and/or managing a user, session, or quality of service (quality of service, QoS) flow processing policy.

The NEF is mainly responsible for providing a framework, authentication, and an interface related to network capability exposure, and transmitting information between a network function of the mobile communication system and another network function.

The UDM is mainly responsible for user subscription context management.

The UDR is mainly responsible for storage and retrieval of subscription data, policy data, application data, and another type of data.

The AF is mainly responsible for providing various business services, and can interact with a core network through the NEF, and interact with a policy management framework to perform policy management and the like.

The AUSF is mainly responsible for performing security authentication on the UE.

The NRF is mainly responsible for providing a storage function and a selection function of network functional entity information for another network element.

The DN is a network located outside the mobile communication system. For example, the DN may be a packet data network (packet data network, PDN), such as an Internet (Internet), an internet protocol (internet protocol, IP) multimedia service (IP Multimedia Service, IMS) network, a data network dedicated to some applications, an Ethernet, or an IP local network. This is not limited in this application. The DN may be deployed with a plurality of services, and may provide the UE with services such as a data service and/or a voice service.

FIG. 1 further shows interfaces between a plurality of network elements in the communication system. The following describes some interfaces. N1 is an interface between the UE and a core network control plane, and the UE may interact with the AMF through the N1 interface. N2 is an interface between an access network device and the core network control plane, and the access network device may interact with the AMF through the N2 interface. N3 is a communication interface between the access network device and the UPF, and is configured to transmit user data. N4 is a communication interface between the SMF and the UPF, and is configured to perform policy configuration and the like on the UPF. N6 is a communication interface between the UPF and the DN. Interfaces between control plane network elements in the CN may be implemented through corresponding service-oriented interfaces. For details, refer to FIG. 1.

It should be noted that the communication system shown in FIG. 1 does not constitute a limitation on a communication system to which embodiments of this application are applicable. Therefore, the network slice subscription method provided in embodiments of this application is further applicable to communication systems of various standards, for example, an LTE communication system, a 5G communication system, a 6G communication system, a future communication system, vehicle to everything (vehicle to everything, V2X), long term evolution-internet of vehicles (LTE-vehicle, LTE-V), vehicle to vehicle (vehicle to vehicle, V2V), an internet of vehicles, machine type communication (Machine Type Communication, MTC), an internet of things (internet of things, IoT), long term evolution-machine to machine (LTE-machine to machine, LTE-M), machine to machine (M2M), and an internet of things. In addition, it should be further noted that names of the network elements in the communication system are not limited in embodiments of this application either. For example, in communication systems of different standards, network elements may have other names. For another example, when the plurality of network elements are integrated into a same physical device, the physical device may alternatively have another name.

Currently, a company can rent or purchase a network slice from an operator. After a UE subscribes to a service corresponding to a network slice from the company, the company may request the operator to cause the UE to subscribe to the corresponding network slice. Currently, when causing the UE to subscribe to the network slice, the operator manually performs network slice subscription. For example, a company 1 rents or purchases a network slice 1 of the operator, and uses the network slice 1 as a network slice used to transmit a data packet of a video application 1. If a plurality of UEs subscribe to members of the video application 1 from the company 1, the company 1 may provide a list of the plurality of UEs to the operator, and the operator may manually cause the plurality of UEs to subscribe to the network slice 1. In this way, the operator consumes a large amount of manpower to cause the UE to subscribe to the network slice. In view of this, this application provides a network slice subscription method, to improve a speed at which the UE subscribes to the network slice.

The following describes the solutions provided in this application with reference to the accompanying drawings.

An embodiment of this application provides a network slice subscription method. The method may be applied to the communication system shown in FIG. 1. Refer to a flowchart shown in FIG. 2. The following describes a procedure of the method in detail by using an example in which a network exposure function network element is an NEF, an application function network element is an AF, a unified data management network element is a UDM, and a policy control function network element is a PCF.

S201: The AF sends a first indication to the NEF. Correspondingly, the NEF receives the first indication from the AF.

The first indication may indicate to cause a UE to subscribe to a network slice.

In this application, the first indication may be a message that indicates to cause the UE to subscribe to the network slice, or may be an information element in a message. When the first indication is an information element, the first indication may reuse an information element in an existing message, or may be a new information element in an existing message, or may be an information element in a new message. This is not limited in this application.

In some possible manners, the UE and the network slice that are indicated by the first indication may not be a specific UE and network slice. For example, the first indication may be indicated by using a first field in the message. When a value of the first field is a first value (for example, 0 or 1), the first indication indicates to cause the UE to subscribe to the network slice.

In some other possible manners, the first indication may indicate to cause a specific UE (for example, a first UE) to subscribe to a specific network slice (for example, a first network slice). In this case, the first indication may include first UE indication information indicating the first UE and first network slice indication information indicating the first network slice.

The first UE indication information may include at least one of the following:
1. Identifier of the first UE: The identifier of the first UE identifies the first UE. For example, the identifier of the first UE may be a generic public subscription identifier (generic public subscription identifier, GPSI) or a subscription permanent identifier (subscription permanent identifier, SUPI) of the first UE.
2. Address of the first UE: The address of the first UE may be, for example, an IP address of the first UE. The IP address of the first UE may be an internet protocol version 4 (Internet Protocol version 4, IPv4) address or an internet protocol version 6 (Internet Protocol version 6, IPv6) address of the first UE. The IP address of the first UE may alternatively be replaced with another type of address of the first UE.
3. Identifier of a user group to which the first UE belongs: The identifier of the user group to which the first UE belongs identifies the user group to which the first UE belongs, and is, for example, an external group identifier or an internal group identifier of the user group to which the first UE belongs.

The first network slice indication information may include at least one of the following: an identifier of the first network slice (for example, single network slice selection assistance information (single network slice selection assistance information, S-NSSAI) of the first network slice) and a data network name (data network name, DNN) corresponding to the first network slice; an application function service identifier (afServiceId) of the AF, where the application function service identifier corresponds to the first network slice; and an application identifier (appId) of a first application in the first UE, where the application identifier corresponds to the first network slice.

In addition, the AF may send the first indication to the NEF when at least one of the following conditions is satisfied:
Condition 1: The AF receives a service request message, where the service request message indicates that the first UE requests to use the first network slice or indicates to cause the first UE to subscribe to the first network slice. The service request message includes the first UE indication information and the first network slice indication information. Optionally, the AF may receive the service request message from the first UE.
Condition 2: The AF receives a request used to cause the first UE to subscribe to a first service, where there is a correspondence between the first service and the first network slice. For example, the AF is a server of a company 1. The company 1 rents or purchases a first network slice of an operator, and uses the first network slice as a network slice used to transmit a data packet of a first application (for example, a video application 1). In this case, the AF may store a correspondence between the first application and the first network slice. When the AF receives, from the first UE, a request used to subscribe to a membership service of the first application, the AF may determine to initiate a URSP request, and determine to send the first indication. The URSP request includes the correspondence between the first application and the first network slice.

S202: The NEF sends a first request to the UDM. Correspondingly, the UDM receives the first request from the NEF.

For example, the NEF sends the first request to the UDM based on the first indication.

The first request may be used to request to cause the first UE to subscribe to the first network slice, and the first UE is the UE indicated by the first indication. In this way, after receiving the first request, the UDM may cause the first UE to subscribe to the first network slice.

The first request may be a message transmitted on an interface between the NEF and the UDM. The message may be an existing message (for example, a parameter provision service (Nudm _ParameterProvision Service)), or may be a new message. This is not limited in this application.

Optionally, the first request includes second UE indication information indicating the first UE and second network slice indication information indicating the first network slice.

The second UE indication information may be the same as the first UE indication information, or may be different from the first UE indication information. When the second UE indication information is different from the first UE indication information, there may be a correspondence between the second UE indication information and the first UE indication information, and the second UE indication information is information that can be identified by the UDM. For example, when the first UE indication information includes the GPSI of the first UE, the NEF may map the GPSI of the first UE to the SUPI of the first UE, and include the SUPI of the first UE in the second UE indication information. For another example, when the first UE indication information includes the external group identifier of the user group to which the first UE belongs, the NEF may map the external group identifier of the user group to which the first UE belongs to the internal group identifier of the user group to which the first UE belongs, and include the external group identifier of the user group to which the first UE belongs in the second UE indication information.

The second network slice indication information may be the same as the first network slice indication information, or may be different from the first network slice indication information. When the second network slice indication information is different from the first network slice indication information, there is a correspondence between the second network slice indication information and the first network slice indication information, and the second network slice indication information is information that can be identified by the UDM. For example, when the first network slice indication information includes the application function service identifier, the NEF may map the application function service identifier to corresponding S-NSSAI and a corresponding DNN, and include the S-NSSAI and the DNN in the second UE indication information. For another example, when the first network slice indication information includes the application identifier, the NEF may map the application identifier to corresponding S-NSSAI and a corresponding DNN, and include the S-NSSAI and the DNN in the second UE indication information.

According to the method, the NEF may request, based on the indication of the AF, the UDM to cause the first UE to subscribe to the first network slice. A speed at which the UE subscribes to the network slice can be improved according to the method, compared with that in a method in which an operator manually changes subscription information. This improves network slice subscription efficiency. In addition, according to the method in which the AF indicates the NEF to cause the UE to subscribe to the network slice, flexibility of changing subscription information can be further improved.

Optionally, after S202, the method further includes step A1.

A1: The UDM sends a first response to the NEF.

Correspondingly, the NEF receives the first response from the UDM.

The first response is a response message of the first request, and indicates that the first UE has subscribed to the first network slice, which is caused by the UDM, after the UDM receives the first request. The first response may be a message transmitted on the interface between the NEF and the UDM. The message may be an existing message, or may be a new message. This is not limited in this application.

Optionally, the first response includes indication information indicating that the first UE has subscribed to the first network slice. For example, the indication information indicating that the first UE has subscribed to the first network slice may be indicated by using a second field in the first response, and the second field indicates whether the first UE has subscribed to the first network slice.

In this application, after the first UE subscribes to the first network slice, the UDM may send the first response to the NEF.

According to the method, the UDM may notify, in a timely manner, the NEF that the first UE has subscribed to the first network slice. In this way, the NEF may manage the first UE in a timely manner, for example, send a URSP to the first UE in a timely manner, where the URSP includes a correspondence between the first UE and the first network slice, so that the first UE can use the first network slice in a timely manner as needed. This improves user experience.

In some possible manners, if the UE and the network slice that are indicated by the first indication are not a specific UE and network slice, S202 may include: When the first UE has not subscribed to the first network slice, the NEF may send the first request to the UDM based on the first indication. In this case, the first indication may indicate the NEF to send the first request to the UDM when the NEF determines that the first UE has not subscribed to the first network slice. For example, when the NEF receives a request used to request to serve the first UE through the first network slice, if the NEF further receives the first indication, the NEF may send the first request to the UDM when determining that the first UE has not subscribed to the first network slice. The request used to request to serve the first UE through the first network slice may include the first UE indication information and the first network slice indication information.

The NEF may determine, in the following steps B1 and B2, that the first UE has not subscribed to the first network slice.

B1: The NEF sends a second request to the UDM. Correspondingly, the UDM receives the second request from the NEF.

The second request is used to request to authenticate whether the first UE has subscribed to the first network slice. The second request may be a message transmitted on the interface between the NEF and the UDM. The message may be an existing message (for example, a service-specific authorization create request message (Nudm_ServiceSpecificAuthorisation_Create Request)), or may be a new message. This is not limited in this application.

Optionally, the second request includes the second UE indication information and the second network slice indication information.

B2: The UDM sends a second response to the NEF. Correspondingly, the NEF receives the second response from the UDM.

The second response indicates that the first UE has not subscribed to the first network slice. The second response may be a message transmitted on the interface between the NEF and the UDM. The message may be an existing message (for example, a service-specific authorization create response message (Nudm_ServiceSpecificAuthorisation_Create Response)), or may be a new message. This is not limited in this application.

Optionally, the second response includes indication information indicating that the first UE has not subscribed to the first network slice. For example, the indication information indicating that the first UE has subscribed to the first network slice may be indicated by using a third field in the second response, and the third field indicates whether the first UE has subscribed to the first network slice.

In addition, after determining that the first UE has not subscribed to the first network slice, the UDM may send the second response to the NEF. The UDM may determine, in the following manner, whether the first UE has subscribed to the first network slice: The UDM identifies the first UE based on the second UE indication information, and identifies the first network slice based on the second network slice indication information. Then, the UDM may query whether a subscribed network slice of the first UE includes the first network slice. When the subscribed network slice of the first UE includes the first network slice, the UDM determines that the first UE has subscribed to the first network slice. When the subscribed network slice of the first UE does not include the first network slice, the UDM determines that the first UE has not subscribed to the first network slice.

In this application, the subscribed network slice of the UE may also be referred to as a network slice allowed by the UE or a network slice that the UE is allowed to access. The subscribed network slice of the UE may be included in a subscribed network slice list of a single UE, or may be included in a subscribed network slice list of a user group to which the UE belongs.

According to the method, when determining that the first UE has not subscribed to the first network slice, the NEF may actively send the request for causing the first UE to subscribe to the first network slice. Therefore, the first UE can quickly subscribe to the first network slice, so that signaling needed for subscription can be reduced, and signaling overheads can be reduced.

In some other possible manners, if that the first indication indicates to cause the UE to subscribe to the network slice includes: the first indication indicates to cause the first UE to subscribe to the first network slice, S202 may include: After receiving the first indication, the NEF sends the first request to the UDM. In other words, if the UE and the network slice that are indicated by the first indication are a specific UE and network slice, the NEF may send the first request to the UDM after receiving the first indication.

Optionally, before S201, the method further includes step C1.

C1: The NEF sends a second indication to the AF. Correspondingly, the AF receives the second indication from the NEF.

The second indication indicates that the first UE has not subscribed to the first network slice.

In this application, the second indication may be a message that indicates that the first UE has not subscribed to the first network slice, or may be an information element in a message. When the second indication is an information element, the second indication may be an information element in an existing message (for example, a service parameter create response (Nnef_ServiceParameter_Create Response)), or may be a new information element in an existing message, or may be an information element in a new message. This is not limited in this application. In addition, when the second indication is the information element, for specific content of the second indication, refer to the foregoing "indication information indicating that the first UE has not subscribed to the first network slice". Details are not described herein again.

Optionally, after determining that the first UE has not subscribed to the first network slice, the NEF may send the second indication to the AF. For a manner in which the NEF determines that the first UE has not subscribed to the first network slice, refer to steps B1 and B2. Details are not described herein again.

According to the method, after receiving the second indication indicating that the first UE has not subscribed to the first network slice, the AF may indicate the NEF to send a request for causing the first UE to subscribe to the first network slice. In this way, while a speed at which the UE subscribes to the network slice is improved, the AF may perform unified management on a subscription process.

Optionally, in some possible implementations of this embodiment of this application, the method shown in FIG. 2 further includes steps D1 and D2.

D1: The AF sends first information to the NEF. Correspondingly, the NEF receives the first information from the AF.

The first information may be used to determine a correspondence between the first network slice and the first UE.

Optionally, the first information includes the first UE indication information and the first network slice indication information.

In addition, the first information may be included in an existing message (for example, a service parameter create request (Nnef_ServiceParameter Create Request)), or may be included in a new message. The first information and the first indication may be included in a same message. For example, both the first information and the first indication are included in a same service parameter create request. Alternatively, the first information and the first indication may be respectively included in different messages. For example, the first information and the first indication are respectively included in different service parameter create requests (Nnef_ServiceParameter Create Request). When the first information and the first indication are included in the different messages, an execution sequence of step D1 and step 201 is not limited in this application.

After receiving the first information, the NEF may determine the correspondence between the first network slice and the first UE based on the first information. For example, if the first UE indication information includes an identifier of a UE 1, and the first network slice indication information includes S-NSSAI 1 and a DNN 1, the NEF may determine that there is a correspondence among the UE 1, the S-NSSAI 1, and the DNN 1.

D2: The NEF sends second information to the PCF. Correspondingly, the PCF receives the second information from the NEF.

The second information includes information indicating the correspondence between the first network slice and the first UE. The second information may directly or indirectly indicate the correspondence. For example, the second information may include the correspondence between the first network slice and the first UE. For another example, the PCF includes a correspondence table, and the correspondence table includes one or more correspondences between the first network slice and the first UE. The second information is a fourth field. When a value of the fourth field is an index value, a correspondence corresponding to the index value is indicated.

In addition, the second information may be carried in a message transmitted on an interface between the NEF and the PCF. The second information may be carried in an existing message, or may be included in a new message. This is not limited in this application.

Optionally, step D2 may be performed after step A1.

In this method, the NEF may directly send the second information to the PCF through the interface (namely, an Npcf interface) between the NEF and the PCF, and an intermediate node (for example, a UDR) is not needed to transfer the second information. Therefore, signaling overheads can be reduced in this process.

Optionally, in some possible implementations of this embodiment of this application, the method shown in FIG. 2 further includes steps E1 and E2.

E1: The AF sends third information to the NEF. Correspondingly, the NEF receives the third information from the AF.

The third information may be used to trigger generation of the URSP, and the URSP corresponds to the first information.

Optionally, the third information may include some or all information of the first information. For specific content of the third information, refer to step D1. This is not limited in this application.

In addition, the third information may further include information indicating the first application that is in the first UE. The information indicating the first application that is in the first UE may include at least one of the following: an application identifier of the first application, an IP triplet corresponding to the first application, and a fully qualified domain name (Fully Qualified Domain Name, FQDN) corresponding to the first application. The IP triplet corresponding to the first application includes a destination IP address, a port number, and a protocol identifier that correspond to the first application.

In addition, the third information may be included in an existing message (for example, a service parameter create request (Nnef_ServiceParameter Create Request)), or may be included in a new message. The third information and the first indication may be included in a same message. For example, both the third information and the first indication are included in a same service parameter create request. Alternatively, the third information and the first indication may be respectively included in different messages. For example, the third information and the first indication are respectively included in different service parameter create requests (Nnef_ServiceParameter Create Request). When the third information and the first indication are included in the different messages, an execution sequence of step E1 and step 201 is not limited in this application.

After receiving the third information, the NEF may generate the URSP based on the third information. For example, if the first UE indication information in the third information includes the identifier of the UE 1, and the first network slice indication information in the third information includes the S-NSSAI 1 and the DNN 1, the NEF may determine that the URSP includes the correspondence among the UE 1, the S-NSSAI 1, and the DNN 1. For another example, if the first UE indication information in the third information includes the identifier of the UE 1, the first network slice indication information in the third information includes the S-NSSAI 1 and the DNN 1, and the information indicates that the first application in the first UE includes an identifier of the application 1, the NEF may determine that the URSP includes a correspondence among the application 1 in the UE 1, the S-NSSAI 1, and the DNN 1.

E2: The NEF sends the URSP to the PCF.

The URSP may be an implementation of the second information in step D2. For specific content of step E2, refer to step D2. Details are not described herein again.

Currently, an NEF sends a URSP to a UDR, and then a PCF obtains the URSP from the UDR. The procedure is complex. According to the method, the NEF may directly send the URSP to the PCF through the interface between the NEF and the PCF. This reduces signaling overheads. In addition, in the method, the PCF does not need to preconfigure the URSP, and the UDR is not needed to transfer the URSP. Therefore, implementation is simple.

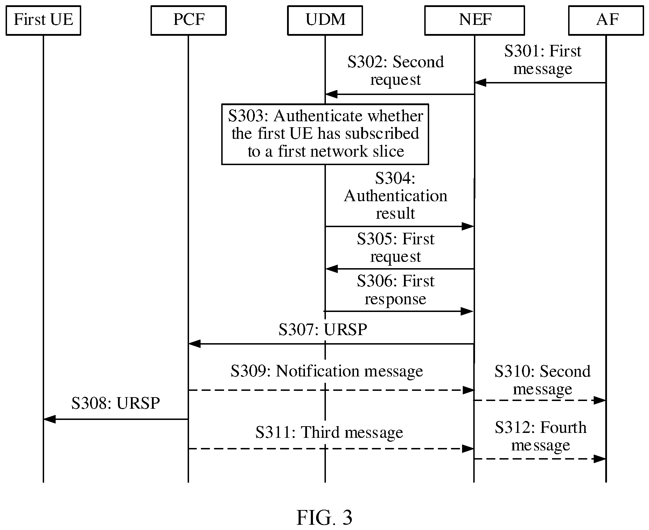

An embodiment of this application provides another network slice subscription method. FIG. 3 is a possible implementation of the method according to FIG. 2. The method may be applied to the communication system shown in FIG. 1. Refer to a flowchart shown in FIG. 3. The following describes a procedure of the method in detail by using an example in which a network exposure function network element is an NEF, an application function network element is an AF, a unified data management network element is a UDM, and a policy control function network element is a PCF.

S301: The AF sends a first message to the NEF.

The first message is used to initiate a URSP request.

For example, the first message includes a first indication and third information. The first indication may indicate to cause a first UE to subscribe to a first network slice when the first UE has not subscribed to the first network slice corresponding to a first application. For specific content, refer to a manner in which "the UE and the network slice that are indicated by the first indication may not be a specific UE and network slice" in step S201. The third information may be used to trigger generation of a URSP. For specific content, refer to step E1. Repeated details are not described again.

Optionally, when Condition 2 in S201 is satisfied, the AF may send the first message to the NEF.

Optionally, the first message may be an existing message, or may be a new message. When the first message is the existing message, the first message may be one of the following: a service parameter create request (Nnef_ServiceParameter_Create Request), a service parameter update request (Nnef_ServiceParameter_Update Request), and a service parameter delete request (Nnef_ServiceParameter_Delete Request).

S302: The NEF sends a second request to the UDM.

The second request is used to request to authenticate whether the first UE has subscribed to the first network slice.

For specific content of S302, refer to step B1. Repeated details are not described again.

Optionally, the second request further includes a service type of the first UE.

S303: The UDM authenticates whether the first UE has subscribed to the first network slice.

When the first UE is one UE, the UDM may check whether a first list includes the first network slice, where the first list includes subscribed S-NSSAI and/or a subscribed DNN of the UE. If the first list includes the first network slice, the UDM determines that the first UE has subscribed to the first network slice. If the first list does not include the first network slice, the UDM determines that the first UE has not subscribed to the first network slice.

When the first UE is a group of UEs, the UDM may check whether a second list includes the first network slice, where the second list includes group subscribed S-NSSAI and/or group subscribed DNNs of the group of UEs. If the second list includes the first network slice, the UDM determines that the first UE has subscribed to the first network slice. If the second list does not include the first network slice, the UDM determines that the first UE has not subscribed to the first network slice.

S304: The UDM sends an authentication result to the NEF.

For example, the authentication result may also be referred to as a service authorization result.

If the authentication result indicates that the first UE has subscribed to the first network slice, for specific content of the authentication result, refer to "the indication information indicating that the first UE has subscribed to the first network slice" in step A1. Details are not described herein again. If the authentication result indicates that the first UE has not subscribed to the first network slice, the authentication result may be "indication information indicating that the first UE has not subscribed to the first network slice" in step B2. For specific content, refer to step B2. Details are not described herein again.

Optionally, the authentication result may be carried in an existing message (for example, a service-specific authorization create response message), or may be carried in a new message. This is not limited in this application.

S305: If the authentication result indicates that the first UE has not subscribed to the first network slice, the NEF sends a first request to the UDM, where the first request is used to request to cause the first UE to subscribe to the first network slice.

For specific content of S305, refer to S202. Repeated details are not described again.

For example, the first request is a parameter provision service (Nudm_ParameterProvision Service), and the parameter provision service includes information indicating the first UE, and S-NSSAI and a DNN of the first network slice.

S306: The UDM sends a first response to the NEF, where the first response indicates that the first UE has subscribed to the first network slice.

For specific content of S306, refer to step A1. Details are not described herein again.

For example, a name of the first response may be a parameter provision service response (Nudm_ParameterProvision Service response).

S307: The NEF sends the URSP to the PCF.

For specific content of S307, refer to step E2. Repeated details are not described again.

The URSP may be carried in a message on an interface between the NEF and the PCF.

In some possible manners, the URSP may be carried in a new message, and the message may be referred to as UE policy authorization (Npcf_UEPolicyAuthorization). For example, the message includes an identifier of the first UE, a group identifier of a group to which the first UE belongs or an indication indicating that any UE is applicable, an application identifier of the first application, and S-NSSAI and DNN information of the first network slice.

In some other possible manners, the URSP may be carried in an existing message. For example, the URSP may be carried in access and mobility (access and mobility, AM) policy authorization (Npcf_AMPolicyAuthorization), and the AM policy authorization includes an identifier of the first UE, a group identifier of a group to which the first UE belongs or an indication indicating that any UE is applicable, an application identifier of the first application, and S-NSSAI and DNN information of the first network slice.

S308: The PCF sends the URSP to the first UE.

After receiving the URSP from the NEF, the PCF may dynamically deliver the URSP. If the PCF can communicate with the first UE, the PCF may send the URSP to the first UE via an AMF. If the PCF cannot communicate with the first UE, the PCF may wait until the PCF can communicate with the first UE, and then send the URSP to the first UE via an AMF.

Optionally, after S307, the method further includes S309 and S310.

S309: The PCF sends a notification message to the NEF, where the notification message may indicate that the PCF has received the URSP.

It should be understood that an execution sequence of S308, and S309 and S310 is not limited in this application.

S310: The NEF sends a second message to the AF, where the second message may indicate that the NEF has delivered the USRP.

The second message may be an existing message, or may be a new message. When the second message is the existing message, the second message may be a response message of the first message. For example, the second message is one of the following: a service parameter create response (Nnef_ServiceParameter_Create Response), a service parameter update response (Nnef_ServiceParameter_Update Response), and a service parameter delete response (Nnef_ServiceParameter_Delete Response).

Optionally, the AF may further subscribe to a UE policy delivery result notification. In this case, in S301, the first message includes information indicating that the AF subscribes to the UE policy delivery result notification; in S307, the message carrying the URSP includes the information indicating that the AF subscribes to the UE policy delivery result notification; and after S308, the method further includes:
S311: The PCF sends a third message to the NEF.

For example, the third message includes a UE policy delivery result.

The third message may be an existing message (for example, an event exposure notify (Npcf_EventExposure_Notify) message), or may be a new message. This is not limited in this application.

The UE policy delivery result in the third message may include at least one of the following: second UE indication information and second network slice indication information. For specific content of the second UE indication information and the second network slice indication information, refer to S202. Details are not described herein again.

S312: The NEF sends a fourth message to the AF.

For example, the fourth message includes the UE policy delivery result.

The fourth message may be an existing message (for example, a service parameter notification (Npcf_ServiceParameter_Notify)), or may be a new message. This is not limited in this application.

The UE policy delivery result in the fourth message may include at least one of the following: first UE indication information and first network slice indication information. For the first UE indication information and the first network slice indication information, respectively refer to the descriptions of the first UE indication information and the first network slice indication information in S201. Details are not described again.

The first UE indication information may be the same as the second UE indication information, or may be different from the second UE indication information. When the first UE indication information is different from the second UE indication information, there may be a correspondence between the first UE indication information and the second UE indication information, and the first UE indication information is information that can be identified by the AF. For example, when the second UE indication information includes a SUPI of the first UE, the NEF may map the SUPI of the first UE to a GPSI of the first UE, and include the GPSI of the first UE in the first UE indication information. For another example, when the second UE indication information includes an internal group identifier of a user group to which the first UE belongs, the NEF may map the internal group identifier of the user group to which the first UE belongs to an external group identifier of the user group to which the first UE belongs, and include the internal group identifier of the user group to which the first UE belongs in the first UE indication information.

The first network slice indication information may be the same as the second network slice indication information, or may be different from the second network slice indication information. When the first network slice indication information is different from the second network slice indication information, there may be a correspondence between the first network slice indication information and the second network slice indication information, and the first network slice indication information is information that can be identified by the AF. For example, when the second network slice indication information includes S-NSSAI and a DNN, the NEF may map the S-NSSAI and the DNN to a corresponding application function service identifier or application identifier based on a correspondence among the S-NSSAI, the DNN, and the application identifier, or a correspondence among the S-NSSAI, the DNN, and the application identifier. The first network slice indication information includes the application function service identifier or the application identifier.

Optionally, in S301, the first message may include an indication indicating that any UE is applicable and the third information. In this case, after receiving the first message, the NEF may send the URSP to the PCF. For example, the indication indicating that any UE is applicable may be a fifth field (for example, any user identity (any UE indication, anyUeInd)) in the message, and the fifth field indicates whether any UE is applicable.

According to the method shown in FIG. 3, the AF may send the first indication to the NEF, to indicate the NEF to send, to the UDM when determining that the first UE has not subscribed to the first network slice, the first request used to request to cause the first UE to subscribe to the first network slice. In this way, an interface between the UDM and the NEF can support a subscription capability of a network slice, and an operator does not need to manually modify subscription information. Therefore, a speed at which the UE subscribes to the network slice can be improved, and network slice subscription efficiency can be improved. In addition, in the method, the AF may include, in one message, the first indication and the third information used to generate the URSP, so that signaling overheads can be reduced.

In addition, the NEF may directly send the URSP to the PCF through an interface between the NEF and the PCF. This reduces signaling overheads. In addition, in the method, the PCF does not need to preconfigure the URSP, and the UDR is not needed to transfer the URSP. Therefore, implementation is simple.

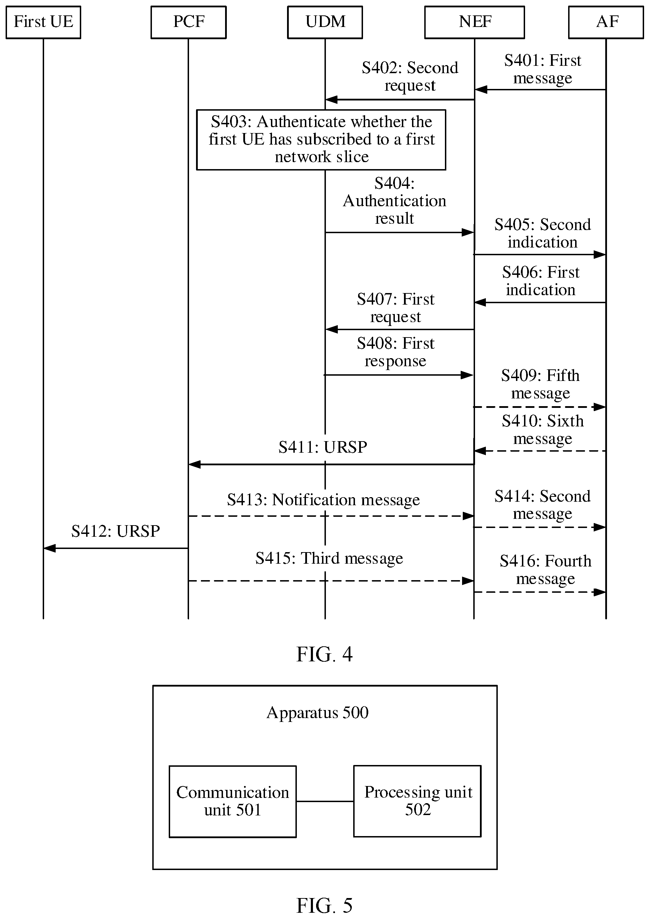

An embodiment of this application provides another network slice subscription method. FIG. 4 is another possible implementation of the method according to FIG. 2. The method may be applied to the communication system shown in FIG. 1. Refer to a flowchart shown in FIG. 4. The following describes a procedure of the method in detail by using an example in which a network exposure function network element is an NEF, an application function network element is an AF, a unified data management network element is a UDM, and a policy control function network element is a PCF.

S401: The AF sends a first message to the NEF.

The first message is used to initiate a URSP request.

For example, the first message includes third information. The third information may be used to trigger generation of a URSP. For specific content, refer to step E1. Repeated details are not described again.

Optionally, when Condition 2 in S201 is satisfied, the AF may send the first message to the NEF.

Optionally, the first message may be an existing message, or may be a new message. When the first message is the existing message, the first message may be one of the following: a service parameter create request, a service parameter update request, or a service parameter delete request.

S402: The NEF sends a second request to the UDM.

The second request is used to request to authenticate whether a first UE has subscribed to a first network slice.

S403: The UDM authenticates whether the first UE has subscribed to the first network slice.

S404: The UDM sends an authentication result to the NEF.

For example, the authentication result may also be referred to as a service authorization result.

For specific content of S402 to S404, refer to S302 to S304. Details are not described herein again.

S405: If the authentication result indicates that the first UE has not subscribed to the first network slice, the NEF sends a second indication to the AF, where the second indication indicates that the first UE has not subscribed to the first network slice.

For specific content of S405, refer to step C1. Repeated details are not described again.

Optionally, the second indication may be carried in an existing message (for example, a service parameter create response), or may be carried in a new message. This is not limited in this application. For example, the second indication is carried in a response message of the first message.

S406: The AF sends a first indication to the NEF, where the first indication indicates to cause the first UE to subscribe to the first network slice.

For specific content of S406, refer to a manner in which "the first indication may indicate to cause a specific UE to subscribe to a specific network slice" in S201. Details are not described herein again.

S407: The NEF sends a first request to the UDM, where the first request is used to request to cause the first UE to subscribe to the first network slice.

For specific content of S407, refer to S202 and S305. Repeated details are not described again.

S408: The UDM sends a first response to the NEF, where the first response indicates that the first UE has subscribed to the first network slice.

For specific content of S408, refer to steps A1 and S306. Repeated details are not described again.

S409: The NEF sends a fifth message to the AF, where the fifth message indicates that the first UE has subscribed to the first network slice.

Optionally, the fifth message may be an existing message, or may be a new message. When the fifth message is the existing message, the fifth message may be a response message of a message that carries the first indication. For example, the fifth message is one of the following: a service parameter create response, a service parameter update response, and a service parameter delete response.

S410: The AF sends a sixth message to the NEF, where the sixth message is used to initiate a URSP request.

For specific content of the sixth message, refer to the descriptions of the first message in S401. Details are not described herein again.

S411: The NEF sends a URSP to the PCF.

S412: The PCF sends the URSP to the first UE.

For specific content of S411 and S412, refer to S307 and S308. Details are not described herein again.

Optionally, before S411, the NEF may determine, according to steps F1 to F3, that the first UE has subscribed to the first network slice.

F1: The NEF sends the second request to the UDM. The second request is used to request to authenticate whether the first UE has subscribed to the first network slice.

F2: The UDM authenticates whether the first UE has subscribed to the first network slice.

F3: The UDM sends the authentication result to the NEF, where the authentication result may also be referred to as the service authorization result. The authentication result indicates that the first UE has subscribed to the first network slice.

For specific content of F1 to F3, refer to S302 to S304. Details are not described herein again.

Optionally, after S411, the method further includes S413 and S414.

S413: The PCF sends a notification message to the NEF, where the notification message may indicate that the PCF has received the URSP.

S414: The NEF sends a second message to the AF, where the second message may indicate that the NEF has delivered the USRP.

The second message may be a response message of the sixth message.

It should be understood that an execution sequence of S412, and S413 and S414 is not limited in this application.

For specific content of S413 and S414, refer to S309 and S310. Details are not described herein again.

Optionally, the AF may further subscribe to a UE policy delivery result notification. In this case, in S410, the sixth message includes information indicating that the AF subscribes to the UE policy delivery result notification; in S411, a message carrying the URSP includes the information indicating that the AF subscribes to the UE policy delivery result notification; and after S412, the method further includes:
S415: The PCF sends a third message to the NEF.
   For example, the third message includes a UE policy delivery result.
S416: After performing information mapping, the NEF sends a fourth message to the AF.

For example, the fourth message includes the UE policy delivery result.

For specific content of S415 and S416, refer to S311 and S312. Details are not described herein again.

Optionally, S409 and S410 are optional steps. After S408, the NEF may determine a URSP based on the third information in the first message, and send the URSP to the PCF.

According to the method shown in FIG. 4, after receiving the second indication indicating that the first UE has not subscribed to the first network slice, the AF may send the first indication to the NEF, to indicate the NEF to send, to the UDM, the first request used to request to cause the first UE to subscribe to the first network slice. In this way, an interface between the UDM and the NEF can support a subscription capability of a network slice, and an operator does not need to manually modify subscription information. Therefore, a speed at which a UE subscribes to the network slice can be improved, and network slice subscription efficiency can be improved.

In addition, the NEF may directly send the URSP to the PCF through an interface between the NEF and the PCF. This reduces signaling overheads. In addition, in the method, the PCF does not need to preconfigure the URSP, and the UDR is not needed to transfer the URSP. Therefore, implementation is simple.

Based on a same concept as the method embodiments in FIG. 2 to FIG. 4, an embodiment of this application provides an apparatus by using FIG. 5, and the apparatus may be configured to perform functions of related steps in the foregoing method embodiment. The functions may be implemented by hardware, or may be implemented by software or hardware executing corresponding software. The hardware or the software includes one or more modules corresponding to the functions. A structure of the apparatus is shown in FIG. 5, and includes a communication unit 501 and a processing unit 502. The apparatus 500 may be used in the NEF in the communication system shown in FIG. 1, and may implement the network slice subscription method provided in the foregoing embodiments and examples of this application. The following describes functions of units in the apparatus 500.

The communication unit 501 is configured to receive and send data.

The communication unit 501 may be implemented by using a physical interface, a communication module, a communication interface, and an input/output interface. The apparatus 500 may be connected to a network cable or a cable via the communication unit, to establish a physical connection to another device.

The processing unit 502 may be configured to support the apparatus 500 in performing the processing action in the foregoing method embodiment. The processing unit 502 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In an implementation, the apparatus 500 is used in the NEF in embodiments of this application shown in any one of FIG. 2 to FIG. 4. The following describes a specific function of the processing unit 502 in this implementation.

The processing unit 502 is configured to:
receive a first indication from an application function network element via the communication unit 501, where the first indication indicates to cause a user equipment to subscribe to a network slice; and
send a first request to a unified data management network element based on the first indication via the communication unit 501, where the first request is used to request to cause a first user equipment to subscribe to a first network slice, and the first user equipment is the user equipment.

Optionally, the processing unit 502 is further configured to:
receive first information from the application function network element via the communication unit 501, where the first information is used to determine a correspondence between the first network slice and the first user equipment; and
send second information to a policy control function network element via the communication unit 501, where the second information includes information indicating the correspondence.

Optionally, the first information includes information indicating the first user equipment and information indicating the first network slice.

Optionally, the processing unit 502 is further configured to:
receive third information from the application function network element via the communication unit 501, where the third information is used to trigger generation of a user equipment route selection policy, and the user equipment route selection policy corresponds to the first information; and
send the user equipment route selection policy to the policy control function network element via the communication unit 501.

Optionally, the processing unit 502 is specifically configured to:
send the first request to the unified data management network element based on the first indication via the communication unit 501 when the first user equipment has not subscribed to the first network slice.

Optionally, that the first indication indicates to cause a user equipment to subscribe to a network slice includes:
the first indication indicates to cause the first user equipment to subscribe to the first network slice; and
the processing unit 502 is further configured to: before receiving the first indication from the application function network element via the communication unit 501, send a second indication to the application function network element via the communication unit 501, where the second indication indicates that the first user equipment has not subscribed to the first network slice.

Optionally, the processing unit 502 is further configured to: before sending the first request to the unified data management network element via the communication unit 501,
send a second request to the unified data management network element via the communication unit 501, where the second request is used to request to authenticate whether the first user equipment has subscribed to the first network slice; and
receive a second response from the unified data management network element via the communication unit 501, where the second response indicates that the first user equipment has not subscribed to the first network slice.

Optionally, the processing unit 502 is further configured to: after sending the first request to the unified data management network element via the communication unit 501,
receive a first response from the unified data management network element via the communication unit 501, where the first response indicates that the first user equipment has subscribed to the first network slice.

Optionally, the first request includes the information indicating the first network slice and the information indicating the first user equipment.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

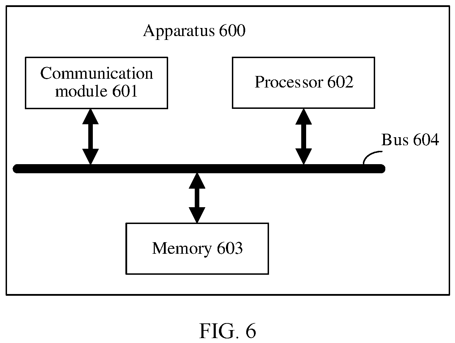

Based on a same technical concept, an embodiment of this application provides an apparatus shown in FIG. 6, and the apparatus may be configured to perform related steps in the foregoing method embodiment. The apparatus may be used in the NEF in the communication system shown in FIG. 1, may implement the network slice subscription method provided in the foregoing embodiments and examples of this application, and has a function of the apparatus shown in FIG. 5. Refer to FIG. 6, the apparatus 600 includes a communication module 601, a processor 602, and a memory 603. The communication module 601, the processor 602, and the memory 603 are connected to each other.

Optionally, the communication module 601, the processor 602, and the memory 603 are connected to each other through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus.

The communication module 601 is configured to receive and send data, to implement communication and interaction with another device. For example, the communication module 601 may be implemented by using a physical interface, a communication module, a communication interface, and an input/output interface.

The processor 602 may be configured to support the apparatus 600 in performing the processing action in the foregoing method embodiment. When the apparatus 600 is configured to implement the foregoing method embodiment, the processor 602 may be further configured to implement a function of the foregoing processing unit 502. The processor 602 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In an implementation, the apparatus 600 is used in the NEF in embodiments of this application shown in any one of FIG. 2 to FIG. 4. The processor 602 is specifically configured to:
receive a first indication from an application function network element via the communication module 601, where the first indication indicates to cause a user equipment to subscribe to a network slice; and
send a first request to a unified data management network element based on the first indication via the communication module 601, where the first request is used to request to cause a first user equipment to subscribe to a first network slice, and the first user equipment is the user equipment.

For a specific function of the processor 602, refer to the descriptions in the network slice subscription method provided in the foregoing embodiments and examples of this application, and the specific function descriptions of the apparatus 500 in embodiments of this application shown in FIG. 5. Details are not described herein again.

The memory 603 is configured to store program instructions, data, and the like. Specifically, the program instructions may include program code, and the program code includes computer operation instructions. The memory 603 may include a RAM, or may further include a non-volatile memory (non-volatile memory), for example, at least one magnetic disk memory. The processor 602 executes the program instructions stored in the memory 603, and implements the foregoing function by using the data stored in the memory 603, to implement the network slice subscription method provided in the foregoing embodiments of this application.

It may be understood that the memory 603 in FIG. 6 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of illustrative rather than limitative descriptions, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these memories and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage, a disk storage medium or another magnetic storage device, or any other medium that can be used to carry or store expected program code in a form of an instruction or a data structure and that can be accessed by the computer.

Based on the foregoing embodiments, an embodiment of this application further provides a chip. The chip is configured to read a computer program stored in a memory, to implement the method provided in the foregoing embodiments.

According to the foregoing embodiments, an embodiment of this application provides a chip system. The chip system includes a processor, configured to support a computer apparatus in implementing functions of the devices in the foregoing embodiments. In a possible implementation, the chip system further includes a memory. The memory is configured to store a program and data that are necessary for the computer apparatus. The chip system may include a chip, or may include a chip and another discrete component.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A network slice subscription method, comprising:
receiving a first indication from an application function network element, wherein the first indication indicates to cause a user equipment to subscribe to a network slice; and
sending a first request to a unified data management network element based on the first indication, wherein the first request is used to request to cause a first user equipment to subscribe to a first network slice, and the first user equipment is the user equipment.

2. The method according to claim 1, wherein the method further comprises:
receiving first information from the application function network element, wherein the first information is used to determine a correspondence between the first network slice and the first user equipment; and
sending second information to a policy control function network element, wherein the second information comprises information indicating the correspondence.

3. The method according to claim 2, wherein the first information comprises:
information indicating the first user equipment and information indicating the first network slice.

4. The method according to claim 2 or 3, wherein the method further comprises:
receiving third information from the application function network element, wherein the third information is used to trigger generation of a user equipment route selection policy, and the user equipment route selection policy corresponds to the first information; and
sending the user equipment route selection policy to the policy control function network element.

5. The method according to any one of claims 1 to 4, wherein the sending a first request to a unified data management network element based on the first indication comprises:
sending the first request to the unified data management network element based on the first indication when the first user equipment has not subscribed to the first network slice.

6. The method according to any one of claims 1 to 5, wherein that the first indication indicates to cause a user equipment to subscribe to a network slice comprises:
the first indication indicates to cause the first user equipment to subscribe to the first network slice; and
before the receiving a first indication from an application function network element, the method further comprises:
sending a second indication to the application function network element, wherein the second indication indicates that the first user equipment has not subscribed to the first network slice.

7. The method according to any one of claims 1 to 6, wherein before the sending a first request to a unified data management network element, the method further comprises:
sending a second request to the unified data management network element, wherein the second request is used to request to authenticate whether the first user equipment has subscribed to the first network slice; and
receiving a second response from the unified data management network element, wherein the second response indicates that the first user equipment has not subscribed to the first network slice.

8. The method according to any one of claims 1 to 7, wherein after the sending a first request to a unified data management network element, the method further comprises:
receiving a first response from the unified data management network element, wherein the first response indicates that the first user equipment has subscribed to the first network slice.

9. The method according to any one of claims 1 to 8, wherein the first request comprises:
the information indicating the first network slice and the information indicating the first user equipment.

10. A network slice subscription apparatus, comprising:
a communication unit, configured to receive and send data; and
a processing unit, configured to:
receive a first indication from an application function network element via the communication unit, wherein the first indication indicates to cause a user equipment to subscribe to a network slice; and
send a first request to a unified data management network element based on the first indication via the communication unit, wherein the first request is used to request to cause a first user equipment to subscribe to a first network slice, and the first user equipment is the user equipment.

11. The apparatus according to claim 10, wherein the processing unit is further configured to:
receive first information from the application function network element via the communication unit, wherein the first information is used to determine a correspondence between the first network slice and the first user equipment; and
send second information to a policy control function network element via the communication unit, wherein the second information comprises information indicating the correspondence.

12. The apparatus according to claim 11, wherein the first information comprises:
information indicating the first user equipment and information indicating the first network slice.

13. The apparatus according to claim 11 or 12, wherein the processing unit is further configured to:
receive third information from the application function network element via the communication unit, wherein the third information is used to trigger generation of a user equipment route selection policy, and the user equipment route selection policy corresponds to the first information; and
send the user equipment route selection policy to the policy control function network element via the communication unit.

14. The apparatus according to any one of claims 10 to 13, wherein the processing unit is specifically configured to:
send the first request to the unified data management network element based on the first indication via the communication unit when the first user equipment has not subscribed to the first network slice.

15. The apparatus according to any one of claims 10 to 14, wherein that the first indication indicates to cause a user equipment to subscribe to a network slice comprises:
the first indication indicates to cause the first user equipment to subscribe to the first network slice; and
the processing unit is further configured to: before receiving the first indication from the application function network element via the communication unit, send a second indication to the application function network element via the communication unit, wherein the second indication indicates that the first user equipment has not subscribed to the first network slice.

16. The apparatus according to any one of claims 10 to 15, wherein the processing unit is further configured to: before sending the first request to the unified data management network element via the communication unit,
send a second request to the unified data management network element via the communication unit, wherein the second request is used to request to authenticate whether the first user equipment has subscribed to the first network slice; and
receive a second response from the unified data management network element via the communication unit, wherein the second response indicates that the first user equipment has not subscribed to the first network slice.

17. The apparatus according to any one of claims 10 to 16, wherein the processing unit is further configured to: after sending the first request to the unified data management network element via the communication unit,
receive a first response from the unified data management network element via the communication unit, wherein the first response indicates that the first user equipment has subscribed to the first network slice.

18. The apparatus according to any one of claims 10 to 17, wherein the first request comprises:
the information indicating the first network slice and the information indicating the first user equipment.

19. A communication system, comprising:
a network exposure function network element and an application function network element, wherein the network exposure function network element is configured to perform the method according to any one of claims 1 to 9.

20. The system according to claim 19, wherein the system further comprises:
a unified data management network element, configured to receive a first request from the network exposure function network element, wherein the first request is used to request to cause a first user equipment to subscribe to a first network slice.

21. The system according to claim 19 or 20, wherein the system further comprises:
a policy control function network element, configured to: receive second information from the network exposure function network element, wherein the second information comprises information indicating a correspondence between the first network slice and the first user equipment; and send the information indicating the correspondence to the first user equipment.

22. A computer-readable storage medium, wherein the computer-readable storage medium stores a computer program; and when the computer program is run on a computer, the computer is enabled to perform the method according to any one of claims 1 to 9.

23. A chip, wherein the chip is coupled to a memory, and the chip reads a computer program stored in the memory, to perform the method according to any one of claims 1 to 9.

24. A computer program product, wherein the computer program product comprises a computer program or instructions; and when the computer program or the instructions are run on a processor, the processor is enabled to perform the method according to any one of claims 1 to 9.
